# EUROPEAN PATENT SPECIFICATION

(11) **EP 2 853 304 B1**
(45) Date of publication and mention of the grant of the patent: **26.12.2018**
(21) Application number: 13186646.9
(22) Date of filing: 30.09.2013
(51) Int. Cl.: B01D 45/02, B01D 45/06, G01N 1/20, G01N 1/22

(54) **A device for cleaning a gas to be analyzed from a dispersed phase**
Vorrichtung zum Reinigen eines zu analysierenden Gases
Dispositif de nettoyage d'un gaz à analyser

(43) Date of publication of application: 01.04.2015
(73) Proprietor: VYMPEL GmbH, 40212 Düsseldorf (DE)
(72) Inventor: Derevyagin, Alexandr Mikhailovich, 119002 Moscow (RU); Seleznev, Sergej Viktorovich, 143530 Dedovsk (RU)
(74) Representative: Sloboshanin, Sergej

(56) References cited:
- US-A- 3 559 491
- US-A- 4 912 985
- US-A1- 2011 303 024

## Description

The invention relates to a method and an apparatus for filtering gas intended for analysis with the objective of significantly reducing the amount of solid and liquid aerosol contaminants contained therein.

For the cleaning of gases intended for analysis, usually mechanical filtering elements or membranes with a sufficiently small pore size are used, which can retain solid or liquid aerosol contaminants contained in the gas intended for analysis. Such filters are known, for instance, from WO 2013/098693 A1 or US 4 032 457.

A deficiency of such filters is the necessity to replace or clean them in the exploitation process depending on the degree of their clogging, the degree of clogging itself depending on the concentration of the dispersed phase to be removed in the gas and on the exploitation parameters, which can change, thereby introducing an uncertainty to the determination of the moment for replacing or cleaning the filter. Moreover during replacement of the filter the supply of gas to be analysed stops, which results in a forced cyclical operation mode of the analyzer.

In response to these deficiencies, filters have been developed that extract a representative sample from a gas flow in such a way as to minimize the inclusion of particulates and thereby reduce the confounding consequences of mechanical/membrane-type filters. One such device is known from US 4,912,985 issued to Daum et.al. This design makes use of a sample probe sheath that is closed at one end and opens into the main gas flow. The actual sample probe is located within this sheath where it extracts gas for analysis from the gas that collects within the sample probe sheath. This design includes a calibration gas probe so oriented as to introduce a calibration gas stream into the sample gas probe, as well as additional downstream filter elements and temperature control elements. This filter affords a method for a preliminary reduction in the presence of particulates at the point of extraction from the main flow by means of an "aspiration" zone within the gas probe sheath. An exemplary relationship between the inner diameters of the gas probe sheath and the gas duct is presented as 2.5 inches (gas probe sheath) to 12 inches (gas duct). A limitation of this design is that there is no possibility that it can be so configured as to modulate the flow dynamics within the gas probe sheath in a controlled manner so as to allow for sufficient elimination of particulates, whereby the need for supplemental mechanical filtration would be eliminated. This being the case, while this design does have the operational effect of extending the period between cleaning or replacement of the mechanical/membrane-type filters, the inherent limitations of these elements is not eliminated, therefore the problems associated with these filters remain. In addition, as this design involves the introduction of a calibration gas to purge the system at regular intervals, a component is introduced into the gas that necessarily alters the concentration levels of the sample gas constituents for the period that the calibration gas remains in the system. This introduction of a confounding component into the sample gas is another source of cyclical interruptions in analysis, similar to those caused by mechanical/membrane-type filters.

A filter assembly with some similarities to the Daum device is known from US 3,559,491 issued to Thoen et.al. In this instance the filter is oriented horizontally, and also features a sample probe sheath. In this case the sheath is present to specifically provide protection of the sample probe against the damaging effects of the specific type of gas flow for which this device was designed. In addition, the opening of the sample probe sheath is so oriented as to introduce a degree of filtration by impeding the presentation of particulates to the inlet of the sample probe. This device incorporates the generation of a vacuum within the system that is required to extract a gas sample via the gas probe from the main gas flow. The disadvantage of this system is that the potential filtration provided by the sample probe sheath is somewhat offset by the action of the vacuum in that some particulate matter is actively collected along with the gas sample. As a result, the filtration effects of the sample probe sheath are limited. As is the case with the Daum device, the sample probe requires periodic flushing. In the Thoen device this is accomplished by the introduction of a purging gas or fluid stream that flows opposite to the normal gas flow to remove accumulated particulates. Similar to the Daum device, the need for periodic cleaning necessitates periodic interruption of the analysis. Therefore, the issue of interruption of the analysis process is not resolved in these devices. A third device is known from US 2011/0303024 A1 awarded to E.C. Wallis, et.al. This device was not designed as a filter, per se, but as a selective sampling device. Here again concentric tubes are arranged in such a way that a smaller tube extracts a portion of the gas flowing through a larger tube. While this could have the effect of a degree of filtration, depending on how flow was regulated, the design is specifically conceived to alter the composition of the gas in order to highlight specific components. This device when operated as intended has the effect of altering the composition of the gas and is therefore not a suitable design for analysis applications where changes to the gas composition is a confounding factor. In addition, this design is not so arranged as to inherently eliminate mechanical and aerosol contaminants. While some of these constituents of the gas could be eliminated, this design would be subject to clogging and fouling that would require periodic cleaning. Once again the issue of regular interruption in operation is not resolved.

The task underlying the invention consists in providing a method for cleaning gas intended for analysis from the dispersed phase and an apparatus for its execution, operating in a continuous mode and making it possible to carry out an effective cleaning of the gas from the dispersed phase, keeping the construction of the plant simple and the exploitation costs low.

In accordance with the invention the underlying task is solved using an inertia-gravity filter according to claim 1 and a method for cleaning gas to be analyzed according to claim 8. Preferred embodiments of the inertia-gravity filter are disclosed in dependent claims 2 to 7, whereas the preferred embodiments of the method for cleaning gas to be analyzed from contaminants contained in the dispersed phase are disclosed in dependent claim 9.

According to the invention, the inertia-gravity filter for cleaning a gas intended for analysis from the dispersed phase comprises a vertically arranged hermetically sealed flow-type precipitation chamber having an upper and a lower end portion, an inlet pipe communicating with the lower end portion of the precipitation chamber, an outlet pipe for the blow-through gas communicating with the inlet pipe, a discharge channel for the gas to be analyzed, communicating by its inlet opening with the upper portion of the space of the precipitation chamber, an outlet pipe of the gas to be analyzed, communicating with the outlet opening of the discharge channel of the gas to be analyzed, wherein the filter is formed so that correlations between the volume flow rates of the blow-through flow of the outlet pipe of the blow-through gas and the blow-through flow of the outlet pipe of the gas to be analyzed can be established in a range from 10 to 1 to 50 to 1, preferably 20 to 1 to 40 to 1. The inertia principle used in the filter applied for consists in breaking the direction of movement of a primary gas flow intended for subsequent analysis upwards in vertical direction. When the flow direction changes, part of the dispersed phase contained in the primary gas flow, made up of solid and liquid aerosol contaminants, continues by inertia to move with the flow, which, after the flow of gas to be analyzed is branched off from the primary flow, will hereinafter be referred to as "blow-through gas flow" in the application text. Thus the preliminarily cleaned flow of gas to be analyzed is lifted vertically upwards, wherein a sufficiently slow lifting speed is chosen, that is, lower than the sedimentation speed of the solid and aerosol particles intended for removal from the gas remaining in the flow of gas to be analyzed. Under these conditions the solid particles contained in the flow of gas to be analyzed, moving by their own weight in a direction opposite to the direction of movement of the flow of gas to be analyzed in the vertical flow-type precipitation chamber, that is, downward, are taken out by the flow of blow-through gas. This effect is the basis of the gravitational principle of the function of the subject matter of the invention applied for. The aerosol phase contained in the flow of gas to be analyzed, rising slowly in the precipitation chamber, settles also on the inner walls of the precipitation chamber and is drained downward by its own weight, and is also taken out by the blow-through gas flow. The use of the inertia-gravity principle of the function of the filter according to the invention makes it possible to avoid the use of membrane, charcoal or other porous filters, thus keeping the price low and the construction simple, and also keeping the exploitation costs of the apparatus according to the invention low.

The gas cleaning principle according to the invention can be used in plants preparing gas for an analysis as to certain properties of the gas, for instance, for an analyzer of the dew point with respect to water and hydrocarbons, for chromatographs and other measuring devices.

According to an embodiment, which is not part of the invention but is useful for understanding the invention, the discharge channel of the gas to be analyzed is arranged in the upper end portion of the precipitation chamber and is connected to the outlet pipe of the gas to be analyzed, through which the gas to be analyzed is directed to the gas analysis apparatus (not shown).

One embodiment of the invention provides for the arrangement of the discharge channel of the gas to be analyzed vertically in the precipitation chamber, wherein the outlet opening of the discharge channel of the gas to be analyzed is arranged in the lower end portion of the precipitation chamber, so that the channel for the gas to be analyzed is arranged within the hollow precipitation chamber, extending from the upper end portion to the lower end portion of the precipitation chamber. The advantage of this embodiment of the invention is the compact arrangement of the inlet and outlet pipes of the filter.

According to one of the embodiments of the invention, the discharge channel for the gas to be analyzed and the outlet pipe for the gas to be analyzed are formed as an integral tube, dismountably attached on the lower end portion of the precipitation chamber by the bottom arrangement of the outlet opening of the discharge channel for the gas to be analyzed. The hermetic sealing of the precipitation chamber against the environment is carried out in the form of a tube crimp-fitting, which makes it possible to carry out the joint between the precipitation chamber and the outlet pipe for the gas to be analyzed dismountable.

In one of the embodiments of the invention the side walls of the precipitation chamber and the discharge channel for the gas to be analyzed have a constant sectional profile, which makes it possible to use tube elements which are simple in manufacturing for the construction of the filter according to the invention.

Most preferred is a formation of the inner diameter of the inlet pipe and the outlet pipe for the blow-through gas with an equal diameter, which is smaller than or equal to the inner diameter of the flow-type precipitation chamber. The inner diameter of the inlet pipe and the outlet pipe for the blow-through gas is 20% to 80% of the inner diameter of the flow-type precipitation chamber. This makes it possible to reduce the speed of the flow of gas to be analyzed in the flow-type precipitation chamber as it moves upward, which in turn facilitates precipitation of the of the solid and liquid suspended particles remaining in the flow of gas to be analyzed on the precipitation chamber walls, respectively their downward movement in a direction against the flow of gas to be analyzed.

In the preferred embodiment of the invention a coaxial arrangement of the discharge channel for the gas to be analyzed is provided in the precipitation chamber, which results in a laminar character of the flow of gas to be analyzed, and correspondingly in an improved precipitation capacity of the suspended particles.

Preferred embodiment of the invention provides for a coaxial arrangement of the inlet pipe and the outlet pipe for the blow-through gas, since during a rectilinear movement of the suspended particles in the primary flow of gas intended for analysis and subsequently in the blow-through gas flow the most effective inertia mode of cleaning the flow of gas to be analyzed is provided when the direction of movement of the flow of gas to be analyzed is bent away from this axis.

In the most preferred embodiment of the invention the formation of the filter with the possibility of regulating the time of lifting the volume of gas to be analyzed separated in the flow in the flow-type precipitation chamber within a range of 2 to 10 minutes, preferably 4 to 6 minutes. The volume flow rate of the gas in the flow of gas to be analyzed can be between 0.25 to 0.3 standard l/min., while the flow rate of the gas of the blow-through gas flow can be between 6 and 10 standard l/min. The gas flow rate in "standard l/min." means a flow rate in litres per minute at a gas pressure of 0.1 MPa.

Inertia-gravity filter of the present invention can be used in a method for cleaning gas to be analyzed from contaminants in the dispersed phase contained therein, wherein this method does not fall within the scope of the claims. According to the method the primary flow of gas intended for analysis is supplied into a inertia-gravity filter to reduce the content of solid and liquid aerosol contaminants in the gas intended for analysis, wherein part of the primary flow of gas intended for analysis is extracted as the flow of gas to be analyzed in an upward direction into a vertically arranged flow-type precipitation chamber, wherein the residual gas flow forms the flow of blow-through gas. From the upper portion of the space of the precipitation chamber the flow of gas to be analyzed is taken for subsequent analysis, a correlation between the intensities of the flow of blow-through gas and the flow of gas to be analyzed is established in a range between 10 to 1 and 50 to 1, preferably between 20 to 1 and 40 to 1. Preferably the method applied for is carried out in a continuous mode. Most preferred is an implementation of the method wherein the time of lifting the flow of gas to be analyzed in the flow-type precipitation chamber is established within a range of 2 to 10 minutes, preferably 4 to 6 minutes, for instance, with the above-mentioned gas flow rate levels in the flow of gas to be analyzed and in the flow of blow-through gas.

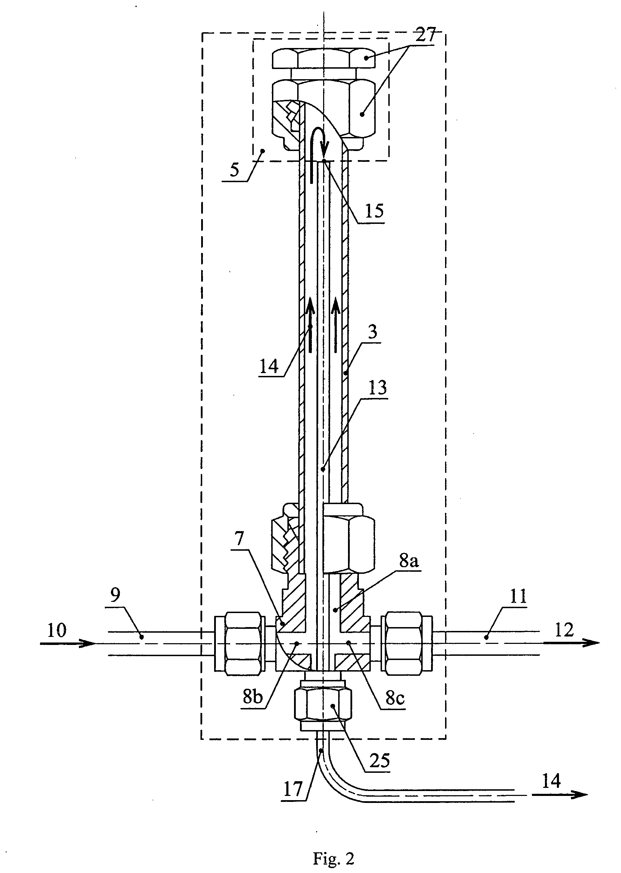

The essence of the invention is explained by Fig. 2.
Fig. 1 schematically shows a partial vertical section of the filter applied for with the outlet opening of the discharge channel for the gas to be analyzed arranged in the upper end portion of the precipitation chamber, which does not fall within the scope of the claims.
Fig. 2 schematically shows a partial vertical section of the filter applied for with the outlet opening of the discharge channel for the gas to be analyzed arranged in the lower end portion of the precipitation chamber.

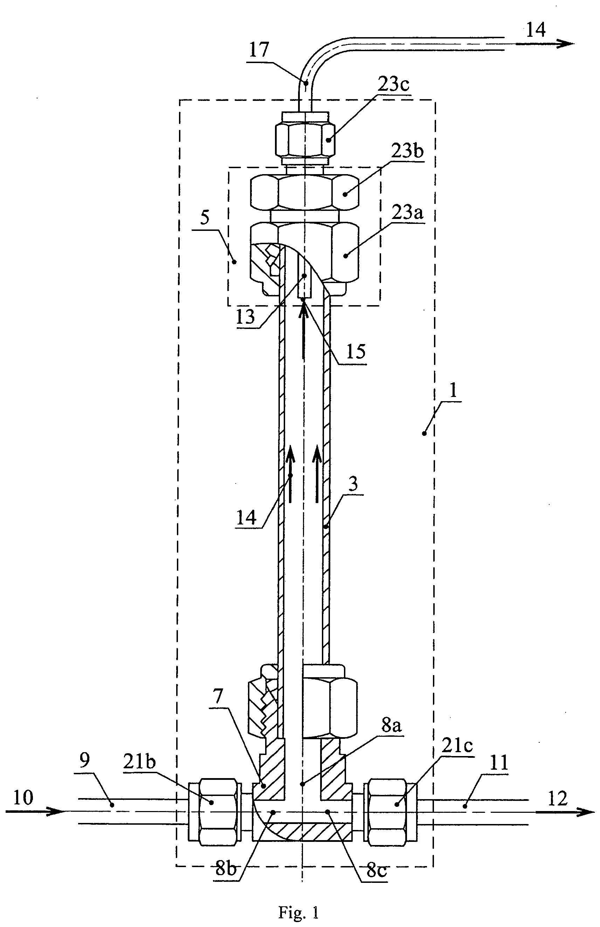

The inertia-gravity filter shown in Fig. 1 not according to the invention includes a vertically arranged flow-type precipitation chamber 3 formed as a hollow tube element of oblong shape and including an upper and a lower end portion 5 and 7, respectively. The lower end portion 7 is shaped as a T-piece, whose flow channels 8a, 8b, 8c have a circular section, wherein the channel 8a of the lower end portion 7, being vertically arranged and immediately connected to the precipitation chamber 3, has an inner diameter approximately equal to the inner diameter of the precipitation chamber 3, while the two horizontal channels 8b, 8c, arranged vertically to it, are arranged coaxially to each other and have a smaller inner diameter compared to the vertical channel 8a. The hermetic attachment of the vertical channel 8a of the lower end portion 7 to the lower end of the flow-type precipitation chamber 3 is carried out dismountably attached in the form of a tube crimp-fitting 21a. The horizontal channels 8b and 8c are dismountably connected to an inlet pipe 9 and an outlet pipe 11, respectively, for the blow-through gas, by means of the tube crimp-fitting 21b and 21c, respectively. The inlet pipe 9, the horizontal channels 8b, 8c of the lower end portion 7, and also the outlet pipe 11 for the blow-through gas are arranged on the same axis.

Fittings of the companies Swagelok, Hi-Lok, DK-Lok or other analogous fixing systems can be used as the tube crimp-fittings 21a, 21b and 21c.

The upper end portion 5 of the flow-type precipitation chamber 3 is formed by tube crimp-fittings 23a and 23b, which fix the discharge channel 13 for the gas to be analyzed, communicating with the upper portion of the space of the precipitation chamber 3 by its inlet opening 15 so that the discharge channel 13 for the gas to be analyzed is arranged within the precipitation chamber 3. In this embodiment the length of the discharge channel 13 for the gas to be analyzed itself is not important, the essential thing being the position of the inlet opening 15 of the discharge channel 13 for the gas to be analyzed in immediate proximity to the upper end portion 5, for instance, arranged at a distance from the upper end wall of the precipitation chamber 3 of not more than 10% of the height of the inner space of the precipitation chamber 3, preferably not more than 5%. The inlet opening 15 of the discharge channel 13 for the gas to be analyzed is arranged on the symmetry axis of the cylindrical precipitation chamber 3, due to which fact the aerosols and solid contaminants precipitated on the inner walls of the precipitation chamber 3 in its upper portion are less likely to reach the inlet opening 15, since they are attracted by the upward-directed flow 14 of gas to be analyzed, indicated by the vertical arrows in Fig. 1.

The outlet opening 17 for the gas to be analyzed is dismountably attached to the upper end portion 5 of the flow-type precipitation chamber 3 by means of the tube crimp-fitting 23c. According to the reference example shown in Fig. 1, the outlet pipe 17 for the gas to be analyzed is integrally formed with the discharge channel 13 for the gas to be analyzed. However, they can be separate elements coaxially connected to each other.

The inlet pipe 9, the outlet pipe 11 for the blow-through gas and the outlet pipe 17 for the gas to be analyzed can be provided with regulator valves and/or manometers and/or rotameters with a flow rate regulator (not shown). Using these means, the filter is provided with the possibility to establish correlations between the intensity of the blow-through flow of the outlet pipe 11 for the blow-through gas and of the blow-through flow of the outlet pipe 17 for the gas to be analyzed, in a range of 10 to 1 to 50 to 1, preferably 20 to 1 to 40 to 1. The flow rate of the gas through the outlet pipe 11 for the blow-through gas can be established in a range of 5-10 normal l/min., while the flow rate of the gas through the outlet pipe 17 for the gas to be analyzed can be established in a range of 0.2-0.5 normal l/min., which makes it possible to form the filter in such a way that the lifting time of the flow of gas to be analyzed in the flow-type precipitation chamber 3 can be regulated in a range of 2 to 10 minutes, preferably 4 to 6 minutes.

Fig. 2 schematically shows a main embodiment of the proposed invention, differing from the embodiment shown in Fig. 1 in the arrangement of the discharge channel 13 for the gas to be analyzed, which runs along the entire length of the flow-type precipitation chamber 3 and runs through the lower end portion 7 up to the connection with the outlet pipe 17 for the gas to be analyzed, attached by means of the tube crimp-fitting 25 to the lower end portion 7. In this embodiment the discharge channel 13 for the gas to be analyzed is formed integrally with the outlet pipe 17 for the gas to be analyzed. Alternatively these two elements can be formed as composites (not shown) arranged coaxially to each other. The upper end portion 7 of the flow-type precipitation chamber 3 is formed as a dummy flange 27 so that the upper portion of the precipitation chamber 3 is hermetically sealed. The discharge channel 13 is shaped cylindrically and arranged coaxially with the flow-type precipitation chamber 3.

The inner diameters of the channels 8a, 8b, 8c, and also their relation to the inner diameter of the precipitation chamber 3 are the same as in the embodiment according to Fig. 1.

The presented embodiments of the inertia-gravity filter are used in accordance with the method for cleaning gas to be analyzed from contaminants in the dispersed phase contained therein as follows. The primary flow 10 of the gas intended for analysis (see Fig. 2) is supplied through the inlet pipe 9 into the inertia-gravity filter 1 to reduce the content of solid and liquid aerosol contaminants in the gas intended for analysis. Part of the primary flow 10 of the gas intended for analysis is extracted as the flow 14 of gas to be analyzed in an upward direction into the flow-type precipitation chamber 3 arranged vertically with respect to the direction of movement of the primary flow 10, wherein the remaining gas flow forms the flow 12 of blow-through gas which continues to move in the same direction as the primary flow 10 of the gas intended for analysis. After the flow 14 of gas to be analyzed has advanced in the flow-type precipitation chamber 3 for several minutes, for instance, between 2 and 10 minutes, preferably between 4 and 6 minutes, which the volume 14 of the gas to be analyzed needs to pass from the place of branch-off from the primary flow 10 to the inlet opening 15 of the discharge channel 13 for the gas to be analyzed, the flow 14 of gas to be analyzed is taken out of the upper portion for the space of the precipitation chamber 3 through the inlet opening 15 of the discharge channel 13 for the gas to be analyzed for subsequent analysis. The correlation of the intensities of the flow of blow-through gas to the flow 14 of gas to be analyzed is established in a range between 10 to 1 and 50 to 1, preferably between 20 to 1 and 40 to 1. The entire method is carried out continuously.

## Claims

1. Inertia-gravity filter for cleaning gas intended for analysis from the dispersed phase, comprising
- a vertically arranged flow-type precipitation chamber (3) having an upper and a lower end portion (5, 7)
- an inlet pipe (9) communicating with the lower end portion (7) of the precipitation chamber (3),
- an outlet pipe (11) for the blow-through gas coaxially communicating with the inlet pipe (9), wherein the precipitation chamber (3) is arranged vertically with respect to the coaxially arranged inlet pipe (9) and the outlet pipe (11),
- a discharge channel (13) for the gas to be analyzed, wherein the side walls of the precipitation chamber (3) and the discharge channel (13) for the gas to be analyzed have a constant sectional profile,
- an outlet pipe (17) for the gas to be analyzed, communicating with the outlet opening of the discharge channel (13) of the gas to be analyzed,
- wherein the filter (1) is adapted to establish the correlations of the intensities of the blow-through flow of the outlet pipe (11) for the blow-through gas to the blow-through flow of the outlet pipe (17) for the gas to be analyzed in a range between 10 to 1 and 50 to 1,
**characterized in that**
- the discharge channel (13) for the gas to be analysed communicates by its inlet opening (15) with the upper portion of the space of the precipitation chamber (3),
- the discharge channel (13) for the gas to be analyzed is arranged vertically in the precipitation chamber (3), wherein the outlet opening of the discharge channel (13) for the gas to be analyzed is arranged in the lower end portion (7) of the precipitation chamber (3),
- the upper end portion (5) of the precipitation chamber (3) is closed,
- the inner diameter of the inlet pipe (9) and the outlet pipe (11) for the blow-through gas is formed with the same diameter, which is smaller than or equal to the inner diameter of the flow-type precipitation chamber (3),
- allowing thereby to operate in a continuous mode and to avoid the use of membrane, charcoal or other porous filters.

2. Filter according to claim 1, **characterised in that** the inlet pipe (9), the outlet pipe (11) for the blow-through gas and the outlet pipe (17) for the gas to be analyzed are provided with regulator valves and/or manometers and/or rotameters with a volume flow rate regulator allowing to establish correlations between the intensity of the blow-through flow of the outlet pipe (11) for the blow-through gas and of the blow-through flow of the outlet pipe (17) for the gas to be analyzed, in a range between 10 to 1 and 50 to 1, preferably between 20 to 1 and 40 to 1.

3. Filter according to claim 1 or 2, **characterised in that** the discharge channel (13) for the gas to be analyzed and the outlet pipe (17) for the gas to be analyzed are formed as an integral tube, dismountably attached on the lower end portion (7) of the precipitation chamber (3), wherein the hermetic sealing of the precipitation chamber (3) against the environment is carried out in the form of a tube crimp-fitting.

4. Filter according to any of the previous claims, **characterised by** the coaxial arrangement of the precipitation chamber (3) and the discharge channel (13) for the gas to be analyzed.

5. Filter according to any of the previous claims, **characterised by** the coaxial arrangement of the inlet pipe (9) and the outlet pipe (11) for the blow-through gas.

6. Filter according to any of the previous claims, **characterised in that** it is designed for regulating the lifting time of the flow of gas to be analyzed in the flow-type precipitation chamber (3) in a range of 2 to 10 minutes, preferably 4 to 6 minutes.

7. Filter according to any of the previous claims, **characterised in that** the inner diameter of the inlet pipe (9) and the outlet pipe (11) for the blow-through gas is 20% to 80% of the inner diameter of the flow-type precipitation chamber (3).

## Patentansprüche

1. Trägheits-Gravitationsfilter zum Reinigen eines zu analysierenden Gases aus einer dispergierten Phase, umfassend
- eine vertikal angeordnete strömungsartige Ausscheidungskammer (3) mit einem oberen und einem unteren Endabschnitt (5, 7),
- ein Eingangsrohr (9), das mit dem unteren Endabschnitt (7) der Ausscheidungskammer (3) in Verbindung steht,
- ein Ausgangsrohr (11) für das Durchströmungsgas, das in koaxialer Verbindung mit dem Eingangsrohr (9) ist, wobei die Ausscheidungskammer (3) vertikal hinsichtlich des koaxial angeordneten Eingangsrohrs (9) und des Ausgangsrohrs (11) angeordnet ist,
- einen Auslasskanal (13) für das zu analysierende Gas, wobei die Seitenwände der Ausscheidungskammer (3) und der Auslasskanal (13) für das zu analysierende Gas einen konstanten Profilschnitt aufweisen,
- ein Ausgangsrohr (17) für das zu analysierende Gas, das in Verbindung mit der Ausgangsöffnung des Auslasskanals (13) des zu analysierenden Gases steht,
- wobei der Filter (1) dazu vorgesehen ist, die Verhältnisse der Intensitäten des Durchströmungsflusses des Ausgangsrohrs (11) für das Durchströmungsgas zu dem Durchströmungsfluss des Ausgangsrohrs (17) für das zu analysierende Gas in einem Bereich von 10 zu 1 und 50 zu 1 festzulegen,
**dadurch gekennzeichnet, dass**
- der Auslasskanal (13) für das zu analysierende Gas durch seine Eingangsöffnung (15) mit dem oberen Abschnitt des Raumes der Ausscheidungskammer (3) kommuniziert,
- der Auslasskanal (13) für das zu analysierende Gas vertikal in der Ausscheidungskammer (3) angeordnet ist, wobei das Ausgangsrohr des Auslasskanals (13) für das zu analysierende Gas in dem unteren Endabschnitt (7) der Ausscheidungskammer (3) angeordnet ist,
- der obere Endabschnitt (5) der Ausscheidungskammer (3) geschlossen ist,
- der Innendurchmesser des Eingangsrohrs (9) und des Ausgangsrohrs (11) für das Durchströmungsgas mit demselben Durchmesser geformt ist, der kleiner als oder gleich dem Innendurchmesser der strömungsartigen Ausscheidungskammer (3) ist,
- dabei ist der Betrieb in einem Dauermodus möglich und es wird die Verwendung einer Membran, Kohle oder anderen porösen Filtern vermieden.

2. Filter nach Anspruch 1, **dadurch gekennzeichnet, dass** das Eingangsrohr (9), das Ausgangsrohr (11) für das Durchströmungsgas und das Ausgangsrohr (17) für das zu analysierende Gas mit Regelventilen und/oder Manometern und/oder Rotametern mit einem Durchflussmengenregler versehen sind, die eine Festlegung der Verhältnisse zwischen den Intensitäten des Durchströmungsflusses des Ausgangsrohrs (11) für das Durchströmungsgas und des Durchströmungsflusses des Ausgangsrohrs (17) für das zu analysierende Gas im Bereich zwischen 10 zu 1 und 50 zu 1, vorzugsweise zwischen 20 zu 1 und 40 zu 1 ermöglichen.

3. Filter nach Anspruch 1 oder 2, **dadurch gekennzeichnet, dass** der Auslasskanal (13) für das zu analysierende Gas und das Ausgangsrohr (17) für das zu analysierende Gas als ein einstückiges Rohr ausgebildet sind, das zerlegbar an dem unteren Endabschnitt (7) der Ausscheidungskammer (3) befestigt ist, wobei das luftdichte Abdichten der Ausscheidungskammer (3) von der Umgebung in Form einer Rohrpressmontage erfolgt.

4. Filter nach einem der vorhergehenden Ansprüche, **gekennzeichnet durch** die koaxiale Anordnung der Ausscheidungskammer (3) und des Auslasskanals (13) für das zu analysierende Gas.

5. Filter nach einem der vorhergehenden Ansprüche, **gekennzeichnet durch** die koaxiale Anordnung des Eingangsrohrs (9) und des Ausgangsrohrs (11) für das Durchströmungsgas.

6. Filter nach einem der vorhergehenden Ansprüche, **dadurch gekennzeichnet, dass** er dazu vorgesehen ist, die Hubzeit der Strömung des zu analysierenden Gases in der strömungsartigen Ausscheidungskammer (3) im Bereich von 2 bis 10 Minuten, vorzugsweise 4 bis 6 Minuten zu regeln.

7. Filter nach einem der vorhergehenden Ansprüche, **dadurch gekennzeichnet, dass** der Innendurchmesser des Eingangsrohrs (9) und des Ausgangsrohrs (11) für das Durchströmungsgas 20% bis 80% des Innendurchmessers der strömungsartigen Ausscheidungskammer (3) beträgt.

## Revendications

1. Filtre par gravité inertielle pour nettoyage de gaz destiné à l'analyse à partir de la phase dispersée, comprenant
- une chambre de précipitation de type à écoulement disposée verticalement (3) ayant une partie d'extrémité supérieure et une partie d'extrémité inférieure (5, 7),
- un tuyau d'entrée (9) communiquant avec la partie d'extrémité inférieure (7) de la chambre de précipitation (3),
- un tuyau de sortie (11) pour le gaz de soufflage communiquant coaxialement avec le tuyau d'entrée (9), dans lequel la chambre de précipitation (3) est disposée verticalement par rapport au tuyau d'entrée (9)et au tuyau de sortie (11) disposés coaxialement,
- un canal d'évacuation (13) pour le gaz à analyser, dans lequel les parois latérales de la chambre de précipitation (3) et le canal d'évacuation (13) pour le gaz à analyser ont un profil de section constant,
- un tuyau de sortie (17) pour le gaz à analyser, communiquant avec l'ouverture de sortie du canal d'évacuation (13) du gaz à analyser,
- dans lequel le filtre (1) est adapté pour établir les corrélations des intensités du flux de soufflage du tuyau de sortie (11) pour le gaz de soufflage au flux de soufflage du tuyau de sortie (17) pour le gaz à analyser dans une plage comprise entre 10 et 1 et 50 et 1,
**caractérisé en ce que**
- le canal d'évacuation (13) pour le gaz à analyser communique par son ouverture d'entrée (15) avec la partie supérieure de l'espace de la chambre de précipitation (3),
- le canal d'évacuation (13) pour le gaz à analyser est disposé verticalement dans la chambre de précipitation (3), dans lequel l'ouverture de sortie du canal d'évacuation (13) pour le gaz à analyser est disposée dans la partie d'extrémité inférieure (7) de la chambre de précipitation (3),
- la partie d'extrémité supérieure (5) de la chambre de précipitation (3) est fermée,
- le diamètre interne du tuyau d'entrée (9) et du tuyau de sortie (11) pour le gaz de soufflage est formé avec le même diamètre, qui est inférieur ou égal au diamètre interne de la chambre de précipitation de type à écoulement (3),
- permettant ainsi de fonctionner en mode continu et d'éviter l'utilisation de membrane, de charbon de bois ou d'autres filtres poreux.

2. Filtre selon la revendication 1, **caractérisé en ce que** le tuyau d'entrée (9), le tuyau de sortie (11) pour le gaz de soufflage et le tuyau de sortie (17) pour le gaz à analyser sont munis de vannes de régulation et/ou de manomètres et/ou de rotamètres avec un régulateur de débit volumétrique permettant d'établir des corrélations entre l'intensité du débit de soufflage du tuyau de sortie (11) pour le gaz de soufflage et du flux de soufflage du tuyau de sortie (17) pour le gaz à analyser dans une plage comprise entre 10 et 1 et 50 et 1, de préférence entre 20 et 1 et 40 et 1.

3. Filtre selon la revendication 1 ou 2, **caractérisé en ce que** le canal d'évacuation (13) pour le gaz à analyser et le tuyau de sortie (17) pour legaz à analyser sont formés sous forme d'un tube intégré, fixé de manière démontable sur la partie d'extrémité inférieure (7) de la chambre de précipitation (3), dans lequel l'étanchéité hermétique de la chambre de précipitation (3) contre l'environnement est réalisée sous la forme d'un tube à sertissage.

4. Filtre selon l'une quelconque des revendications précédentes, **caractérisé par** l'agencement coaxial de la chambre de précipitation (3) et du canal d'évacuation (13) pour le gaz à analyser.

5. Filtre selon l'une quelconque des revendications précédentes, **caractérisé par** la disposition coaxiale du tuyau d'entrée (9) et du tuyau de sortie (11) pour le gaz de soufflage.

6. Filtre selon l'une quelconque des revendications précédentes, **caractérisé en ce qu'**il est conçu pour réguler la durée de soulèvement du flux de gaz à analyser dans la chambre de précipitation de type à écoulement (3) dans un intervalle de 2 à 10 minutes, de préférence de 4 à 6 minutes.

7. Filtre selon l'une quelconque des revendications précédentes, **caractérisé en ce que** le diamètre interne du tuyau d'entrée (9) et du tuyau de sortie (11) pour le gaz de soufflage représente 20 % à 80 % du diamètre interne de la chambre de précipitation de type à écoulement (3).
